# EUROPÄISCHE PATENTSCHRIFT

(11) **EP 3 631 598 B1**
(45) Veröffentlichungstag und Bekanntmachung des Hinweises auf die Patenterteilung: **07.07.2021**
(21) Anmeldenummer: 18725521.1
(22) Anmeldetag: 18.05.2018
(51) Int. Cl.: G06F 3/01, G06Q 10/10

(54) **VERFAHREN ZUM BETREIBEN EINES VIRTUAL-REALITY-SYSTEMS UND VIRTUAL-REALITY-SYSTEM**
METHOD FOR OPERATING A VIRTUAL REALITY SYSTEM, AND VIRTUAL REALITY SYSTEM
PROCÉDÉ POUR FAIRE FONCTIONNER UN SYSTÈME DE RÉALITÉ VIRTUELLE ET SYSTÈME DE RÉALITÉ VIRTUELLE

(30) Priorität: 29.05.2017 DE 102017208936
(43) Veröffentlichungstag der Anmeldung: 08.04.2020
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2018/063071
(87) Internationale Veröffentlichungsnummer: WO 2018/219688

(56) Entgegenhaltungen:
- WO-A1-2016/042862
- CN-A- 106 385 587
- US-A1- 2014 268 356

## Beschreibung

Die Erfindung betrifft ein Verfahren zum Betreiben eines Virtual-Reality-Systems und ein Virtual-Reality-System der in den Oberbegriffen der unabhängigen Patentansprüche angegebenen Art.

Virtual-Reality-Systeme mit einer oder auch mehreren Virtual-Reality-Brillen zum Anzeigen virtueller Umgebungen und darin angeordneter virtueller Objekte sind an sich schon bekannt. So zeigt beispielsweise die DE 10 2014 015 871 A1 eine Virtual-Reality-Brille, welche ein Fahrzeuginsasse während einer Fahrt in einem Kraftfahrzeug nutzen kann. Um zu vermeiden, dass dem Träger der Virtual-Reality-Brille schlecht wird, ist es vorgesehen, mittels einer Kamera die Umgebung des Kraftfahrzeugs abzufilmen, wobei die abgefilmte Kraftfahrzeugumgebung mittels der aufgesetzten Virtual-Reality-Brille angezeigt werden kann. Kopfbewegungen des Trägers der Virtual-Reality-Brille können dabei erfasst und bei der Anzeige der mittels der Virtual-Reality-Brille dargestellten Inhalte berücksichtigt werden.

Die DE 10 2014 221 608 A1 zeigt ein Verfahren zum Anzeigen von kontaktanalogen Informationen in einem Kraftfahrzeug. Um zu verhindern, dass einem Träger einer zum Anzeigen der kontaktanalogen Informationen ausgebildeten Datenbrille schlecht wird, ist es vorgesehen, dass eine kontaktanaloge Anzeige mittels der Datenbrille unterbrochen wird, während mit dem Kraftfahrzeug bezüglich seiner Bewegung ein vorgegebener Schwellwert überschritten wird. Beispielsweise kann bei einer relativ zügigen Fahrt um eine Kurve die Datenbrille derart angesteuert werden, dass während der Kurvenfahrt das Anzeigen von kontaktanalogen Informationen unterbrochen wird, um zu verhindern, dass dem Träger der Datenbrille übel wird.

Die DE 10 2014 019 579 A1 zeigt ein Verfahren zum Betreiben einer Virtual-Reality-Brille in einem Kraftfahrzeug. Mittels der Virtual-Reality-Brille kann zum einen beispielsweise ein Text angezeigt werden. Um zu verhindern, dass einem Träger der Virtual-Reality-Brille während der Fahrt mit dem Kraftfahrzeug schlecht wird, ist es vorgesehen, die Fahrzeugbewegung betreffende Daten zu erfassen und die Virtual-Reality-Brille derart anzusteuern, dass mittels dieser zusätzlich zum Text noch Elemente oder Strukturen angezeigt werden, welche entsprechend der erfassten Fahrzeugbewegung animiert werden.

Zum Stand der Technik auf dem technischen Gebiet der vorliegenden Erfindung zählen auch die CN 106385587 A, WO 2016/042862 A1 und US 2014/268356.

Solche Virtual-Reality-Brillen können beispielsweise auch bei Entwicklungs- und Designtätigkeiten verwendet werden. So ist es möglich, dass sich verschiedene Leute mittels solcher Virtual-Reality-Brillen ein virtuelles Objekt anschauen können, welches sich beispielsweise gerade im Entwicklungsbeziehungsweise Designstadium befindet.

Es ist die Aufgabe der vorliegenden Erfindung, ein Verfahren zum Betreiben eines Virtual-Reality-Systems sowie ein Virtual-Reality-System bereitzustellen, mittels welchen Entwicklungs- und Designtätigkeiten an Produkten erleichtert werden.

Diese Aufgabe wird durch ein Verfahren zum Betreiben eines Virtual-Reality-Systems sowie durch ein Virtual-Reality-System mit den Merkmalen der unabhängigen Patentansprüche gelöst. Eine vorteilhafte Ausgestaltung mit einer zweckmäßigen und nicht-trivialen Weiterbildung der Erfindung ist im abhängigen Anspruch 2 angegeben.

Bei dem erfindungsgemäßen Verfahren zum Betreiben eines Virtual-Reality-Systems wird eine virtuelle Umgebung aus einer ersten virtuellen Perspektive mittels einer von einer ersten Person aufgesetzten ersten Virtual-Reality-Brille angezeigt, wobei die erste virtuelle Perspektive in Abhängigkeit von einer erfassten Kopfposition und/oder Kopfausrichtung der ersten Person vorgegeben wird. Das erfindungsgemäße Verfahren sieht vor, dass mittels einer weiteren von einer weiteren Person aufgesetzten Virtual-Reality-Brille dieselbe virtuelle Umgebung ebenfalls aus der ersten virtuellen Perspektive angezeigt wird. Mittels des erfindungsgemäßen Verfahrens ist es also möglich, dass die weitere Person die virtuelle Umgebung aus derselben virtuellen Perspektive sehen kann wie die erste Person. Die erste Person dient sozusagen als Bildgeber, welche die Perspektive auf die virtuelle Umgebung und darin angeordnete virtuelle Objekte festlegt. Zur Bestimmung beziehungsweise Erfassung der Kopfposition und/oder Kopfausrichtung der ersten Person kann es beispielsweise vorgesehen sein, dass einfach die Position und/oder Ausrichtung der ersten Virtual-Reality-Brille erfasst und bestimmt wird.

Arbeiten beispielsweise die erste Person und die weitere Person gemeinsam an der Entwicklung eines bestimmten Produkts, so können die beiden Personen die besagten Virtual-Reality-Brillen aufsetzen. Durch eine vorgegebene Bedienhandlung ist es beispielsweise möglich, dass die weitere Person ihre aufgesetzte Virtual-Reality-Brille in einen Modus versetzt, in welchem mittels dieser die virtuelle Umgebung und das darin angeordnete zu begutachtende virtuelle Objekt aus derselben virtuellen Perspektive angezeigt wird, wie die erste Person die virtuelle Umgebung mittels ihrer aufgesetzten ersten Virtual-Reality-Brille angezeigt bekommt.

Das erfindungsgemäße Verfahren ist insbesondere nützlich bei Entwicklungs- und Designtätigkeiten, bei welchen mehrere Personen involviert sind. Die Personen können sich in die jeweilige virtuelle Perspektive der anderen Personen versetzen lassen. So ist es beispielsweise möglich, dass eine Gruppe von Personen, die jeweilige Virtual-Reality-Brillen aufgesetzt hat, sich eine virtuelle Umgebung aus ein und derselben virtuellen Perspektive angezeigt bekommt, welche durch die Kopfausrichtung und/oder Kopfposition einer bestimmten Person vorgegeben wird. Diese als Bildgeber dienende Person kann Teil der Gruppe oder auch nicht Teil der Gruppe sein.

In einem nicht beanspruchten Beispiel ist vorgesehen, dass ein insgesamt zur Verfügung stehender Anzeigebereich der weiteren Virtual-Reality-Brille vollständig zum Anzeigen der virtuellen Umgebung aus der ersten virtuellen Perspektive genutzt wird. Die weitere Person dient in dem Fall also als Mitbetrachter der angezeigten Umgebung, wobei die weitere Person ein uneingeschränktes Bild auf die virtuelle Umgebung aus derselben Perspektive wie die erste Person erhält. Dadurch, dass der gesamte zur Verfügung stehende Anzeigebereich der weiteren Virtual-Reality-Brille vollständig zum Anzeigen der virtuellen Umgebung aus der ersten virtuellen Perspektive genutzt wird, kann die weitere Person die virtuelle Umgebung und darin angeordnete virtuelle Objekte genauso gut erkennen wie die erste Person durch die von ihr aufgesetzte erste Virtual-Reality-Brille.

In einem weiteren, nicht beanspruchten Beispiel ist vorgesehen, dass jeweilige Kopfbewegungen der Personen erfasst werden, wobei die mittels der weiteren Virtual-Reality-Brille aus der ersten virtuellen Perspektive angezeigte virtuelle Umgebung ausgeblendet wird, sobald sich die erfassten Kopfbewegungen der ersten und weiteren Person stärker als ein vorgegebenes Maß unterscheiden. Das vorgegebene Maß kann beispielsweise Beschleunigungen, zurückgelegte translatorische oder rotatorische Strecken oder auch Bewegungsgeschwindigkeiten betreffen. Es ist also in diesem Beispiel vorgesehen, dass die weitere Person die virtuelle Umgebung nicht mehr aus der ersten virtuellen Perspektive angezeigt bekommt, sobald sich die erfassten Kopfbewegungen der beiden Personen zu stark unterscheiden. Dadurch wird dem Problem entgegengewirkt, dass der weiteren Person unter Umständen schlecht wird, wenn sie die virtuelle Umgebung aus der Perspektive der ersten Person betrachtet, die realen Bewegungen, insbesondere die Kopfbewegungen der beiden Personen sich jedoch stark unterscheiden. Dadurch, dass in diesem Fall die weitere Person die virtuelle Umgebung nicht mehr aus derselben Perspektive wie die erste Person angezeigt bekommt, kann verhindert werden, dass der weiteren Person übel wird.

Gemäß einem weiteren, nicht beanspruchten Beispiel ist es vorgesehen, dass sobald die aus der ersten virtuellen Perspektive angezeigte virtuelle Umgebung ausgeblendet wird, die virtuelle Umgebung mittels der weiteren Virtual-Reality-Brille aus einer weiteren virtuellen Perspektive eingeblendet wird, welche in Abhängigkeit von einer erfassten Kopfposition und/oder Kopfausrichtung der weiteren Person vorgegeben wird. Sollten sich also die Kopfbewegungen der beiden Personen zu stark unterscheiden, so dass die weitere Person die virtuelle Umgebung nicht mehr aus derselben Perspektive wie die erste Person angezeigt bekommt, so bekommt die weitere Person vorzugsweise die virtuelle Umgebung dann korrespondierend mit ihren eigenen Kopfbewegungen beziehungsweise mit ihrer eigenen Kopfposition angezeigt. Die weitere Person kann also weiterhin die virtuelle Umgebung betrachten, wobei diese in dem Fall die virtuelle Umgebung jedoch korrespondierend zu ihrer eigenen Kopfausrichtung beziehungsweise Kopfpositionierung angezeigt bekommt.

Vorzugsweise ist es in diesem Zusammenhang vorgesehen, dass die aus der ersten virtuellen Perspektive angezeigte virtuelle Umgebung von außen zur Mitte hin ausgeblendet und entsprechend die aus der weiteren virtuellen Perspektive angezeigte virtuelle Umgebung eingeblendet wird. In dem Maße, wie sich die aus der ersten virtuellen Perspektive angezeigte virtuelle Umgebung verkleinert, vergrößert sich also die aus der weiteren virtuellen Perspektive angezeigte virtuelle Umgebung, welche mittels der weiteren Virtual-Reality-Brille angezeigt wird. Sobald also gewisse Diskrepanzen hinsichtlich der Kopfbewegungen zwischen den beiden Personen auftreten, bekommt die weitere Person also die virtuelle Umgebung weiterhin angezeigt, jedoch dann entsprechend ihrer eigenen Kopfpositionierung und Kopfbewegungen.

Gemäß der Erfindung ist es vorgesehen, dass ein insgesamt zur Verfügung stehender Anzeigebereich der weiteren Virtual-Reality-Brille in einen ersten Anzeigebereich und in einen zweiten Anzeigebereich aufgeteilt wird, wobei im ersten Anzeigebereich die virtuelle Umgebung aus der ersten virtuellen Perspektive und im zweiten Anzeigebereich die virtuelle Umgebung aus einer weiteren virtuellen Perspektive angezeigt wird, welche in Abhängigkeit von einer erfassten Kopfposition und/oder Kopfausrichtung der weiteren Person vorgegeben wird.

Gemäß der Erfindung ist es also vorgesehen, dass die weitere Person die virtuelle Umgebung und darin angeordnete virtuelle Objekte sowohl aus derselben virtuellen Perspektive wie die erste Person als auch aus der virtuellen Perspektive angezeigt bekommt, welche ihrer eigenen Kopfpositionierung und/oder eigenen Kopfbewegungen entspricht.

Gemäß einem nicht beanspruchten Beispiel ist in iesem Zusammenhang vorgesehen, dass unabhängig davon, wie sehr sich jeweils erfasste Kopfbewegungen der Personen unterscheiden, die Größenverhältnisse der beiden Anzeigebereiche beibehalten und die virtuelle Umgebung gleichzeitig sowohl aus der ersten als auch aus der weiteren virtuellen Perspektive in den entsprechenden Anzeigebereichen angezeigt wird. Mit anderen Worten das Bild des Bildgebers, also die Anzeige der virtuellen Umgebung aus der ersten virtuellen Perspektive, wird als eine Art kleines Fenster mittels der weiteren Virtual-Reality-Brille eingeblendet, wobei nach wie vor die virtuelle Umgebung mittels der weiteren Virtual-Reality-Brille entsprechend der Kopfpositionierung und/oder Kopfausrichtung der weiteren Person angezeigt wird. Mittels einer Art Split-Screen-Darstellung ist es also für die weitere Person möglich, die virtuelle Umgebung sowohl aus der virtuellen Perspektive der ersten Person als auch entsprechend ihrer eigenen Kopfbewegung und/oder Kopfpositionierung einzusehen.

Gemäß der Erfindung ist es vorgesehen, dass die weitere Virtual-Reality-Brille derart angesteuert wird, dass der zweite Anzeigebereich umso größer und entsprechend der erste Anzeigebereich umso kleiner gewählt wird, je stärker sich jeweils erfasste Kopfbewegungen der ersten Person und der weiteren Person unterscheiden. Die weitere Person sieht also ebenfalls die virtuelle Umgebung sowohl aus der Perspektive der ersten Person als auch entsprechend aus einer virtuellen Perspektive, welche entsprechend ihrer eigenen Kopfbewegungen angepasst wird. Dadurch, dass der zweite Anzeigebereich, in welchem die virtuelle Umgebung entsprechend der eigenen Kopfbewegungen der weiteren Person angezeigt wird, umso größer und entsprechend der erste Anzeigebereich, in welchem die virtuelle Umgebung aus der virtuellen Perspektive der ersten Person angezeigt wird, umso kleiner gewählt wird, je stärker sich die jeweils erfassten Kopfbewegungen der Personen unterscheiden, wird ein besonders guter Kompromiss zwischen der Einsehbarkeit der virtuellen Umgebung aus der Perspektive der ersten Person und der Herausforderung, dass der weiteren Person dadurch nicht übel wird, erzielt. Vorzugsweise wird die weitere Virtual-Reality-Brille derart angesteuert, dass der zweite Anzeigebereich den ersten Anzeigebereich umgibt. Je weniger sich die erfassten Kopfbewegungen der beiden Personen unterscheiden, desto größer wird also mittig mittels der Virtual-Reality-Brille die virtuelle Umgebung aus der ersten virtuellen Perspektive, also quasi aus Sicht der ersten Person, angezeigt. Je größere Diskrepanzen sich hinsichtlich der Kopfbewegungen der Personen ergeben, desto größer wird der zweite Anzeigebereich gewählt, der den ersten Anzeigebereich rahmenartig umgibt, wodurch auf besonders zuverlässige Weise vermieden werden kann, dass der weiteren Person schlecht wird.

Das erfindungsgemäße Virtual-Reality-System umfasst eine erste Virtual-Reality-Brille zum Anzeigen einer virtuellen Umgebung, eine Erfassungseinrichtung zum Erfassen einer Kopfposition und/oder Kopfausrichtung einer ersten Person, welche die Virtual-Reality-Brille trägt, sowie eine Steuereinrichtung, welche dazu eingerichtet ist, eine erste virtuelle Perspektive in Abhängigkeit von der erfassten Kopfposition und/oder Kopfausrichtung der ersten Person vorzugeben und die erste Virtual-Reality-Brille zum Anzeigen der virtuellen Umgebung aus der ersten virtuellen Perspektive anzusteuern. Dabei sieht das erfindungsgemäße Virtual-Reality-System vor, dass die Steuereinrichtung dazu eingerichtet ist, eine weitere von einer weiteren Person aufgesetzte Virtual-Reality-Brille zum Anzeigen der virtuellen Umgebung aus der ersten virtuellen Perspektive anzusteuern, einen insgesamt zur Verfügung stehenden Anzeigebereich der weiteren Virtual-Reality-Brille in einen ersten Anzeigebereich und in einen zweiten Anzeigebereich aufzuteilen, und im ersten Anzeigebereich die virtuelle Umgebung aus der ersten virtuellen Perspektive und im zweiten Anzeigebereich die virtuelle Umgebung aus einer weiteren virtuellen Perspektive anzuzeigen, welche in Abhängigkeit von einer erfassten Kopfposition und/ oder Kopfausrichtung der weiteren Person vorgegeben wird. Das erfindungsgemäße Virtual-Reality-System zeichnet sich dabei dadurch aus, dass die Steuereinrichtung dazu eingerichtet ist, die weitere Virtual-Reality-Brille derart anzusteuern, dass der zweite Anzeigebereich umso größer und entsprechend der erste Anzeigebereich umso kleiner gewählt ist, je stärker sich jeweils erfasste Kopfbewegungen der ersten Person und der weiteren Person unterscheiden.

Vorteilhafte Ausgestaltungen des erfindungsgemäßen Verfahrens sind als vorteilhafte Ausgestaltungen des erfindungsgemäßen Virtual-Reality-Systems anzusehen, wobei das Virtual-Reality-System insbesondere Mittel zur Durchführung der Verfahrensschritte aufweist.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung eines Virtual-Reality-Systems, welches vier Virtual-Reality-Brillen, eine Steuereinrichtung zum Ansteuern der Virtual-Reality-Brillen sowie eine Erfassungseinrichtung zur Erfassung der Ausrichtung und Positionierung der Virtual-Reality-Brillen aufweist;
- Fig. 2: eine schematische Darstellung einer Gruppe von Personen, welche die Virtual-Reality-Brillen aufgesetzt haben;
- Fig. 3: eine schematische Darstellung eines innerhalb einer virtuellen Umgebung angeordneten virtuellen Kraftfahrzeugs und darin angeordneter Avatare, welche korrespondierend zur Relativpositionierung der in Fig. 2 gezeigten Personen angeordnet sind; und
- Fig. 4: eine schematische Darstellung eines Anzeigebereichs von einer der Virtual-Reality-Brillen, mittels welcher die virtuelle Umgebung gleichzeitig aus zwei unterschiedlichen virtuellen Perspektiven angezeigt wird.

In den Figuren sind gleiche oder funktionsgleiche Elemente mit den gleichen Bezugszeichen versehen worden.

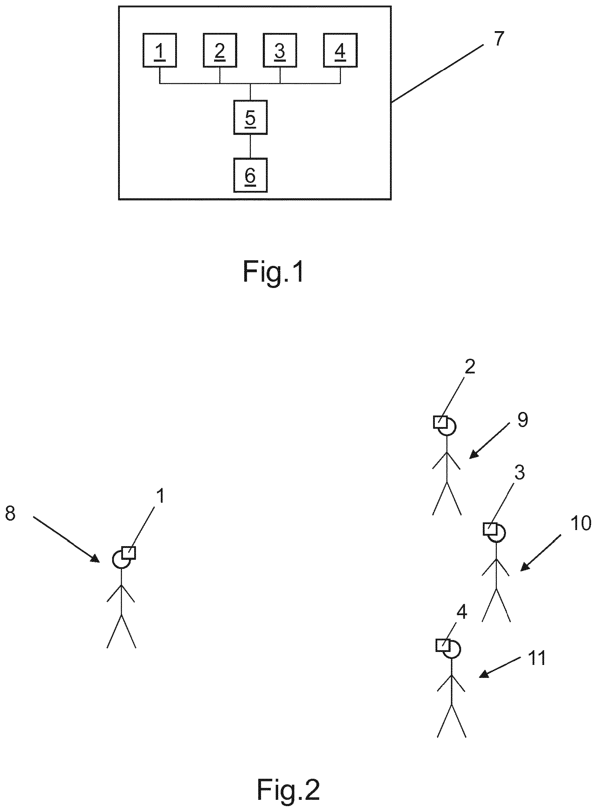

Mehrere Virtual-Reality-Brillen 1, 2, 3, 4, eine Steuereinrichtung 5 zum Ansteuern der Virtual-Reality-Brillen 1, 2, 3, 4 sowie eine Erfassungseinrichtung 6 zur Erfassung der Ausrichtung und Positionierung der jeweiligen Virtual-Reality-Brillen 1, 2, 3, 4 sind in einer schematischen Darstellung in Fig. 1 gezeigt. Die Virtual-Reality-Brillen 1, 2, 3, 4, die Steuereinrichtung 5 und die Erfassungseinrichtung 6 bilden zusammen ein Virtual-Reality-System 7. Das Virtual-Reality-System 7 kann dazu verwendet werden, mehreren Personen den Blick auf eine virtuelle Umgebung zu ermöglichen, beispielsweise, um Entwicklungs- und Designtätigkeiten im Zuge einer Produktentwicklung oder dergleichen zu unterstützen.

In Fig. 2 ist eine Gruppe von Personen 8, 9, 10, 11 dargestellt, wobei die Personen 8, 9, 10, 11 jeweils eine der Virtual-Reality-Brillen 1, 2, 3, 4 aufgesetzt haben. Die Virtual-Reality-Brillen 1, 2, 3, 4 bedecken dabei jeweils das komplette Sichtfeld der Personen 8, 9, 10, 11.

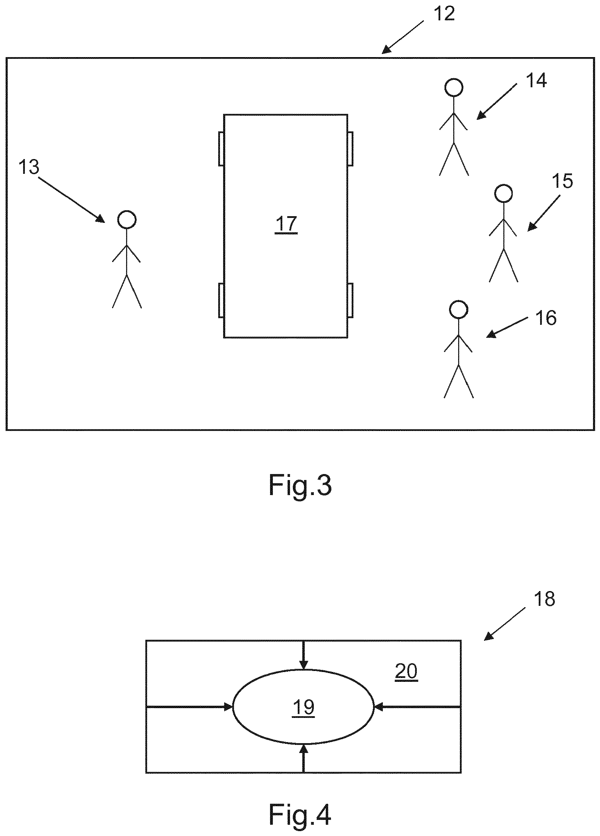

In Fig. 3 ist eine virtuelle Umgebung 12 gezeigt, in der mehrere Avatare 13, 14, 15, 16 angeordnet sind. Die Anordnung der Avatare 13, 14, 15, 16 entspricht dabei der Relativpositionierung der die Virtual-Reality-Brillen 1, 2, 3, 4 tragenden Personen 8, 9, 10, 11, wie in Fig. 2 gezeigt. Zudem ist noch ein virtuelles Kraftfahrzeug 17 angeordnet, welches die in Fig. 2 gezeigten Personen 8, 9, 10, 11 durch ihre jeweils aufgesetzten Virtual-Reality-Brillen 1, 2, 3, 4 sehen entsprechend der Ausrichtung und Positionierung der Avatare können.

Das Virtual-Reality-System 10 kann in einem ersten Modus betrieben werden, bei welchem die Personen 8, 9 10, 11 durch ihre jeweils aufgesetzten Virtual-Reality-Brillen 1, 2, 3, 4 das virtuelle Kraftfahrzeug 17 aus entsprechenden virtuellen Perspektiven angezeigt bekommen, welche mit der jeweiligen Positionierung und Fortbewegung der Personen 8, 9, 10, 11 korrespondiert. Bewegt sich also beispielsweise die Person 8 gemäß der Darstellung in Fig. 2 nach links, so entfernt sie sich vom virtuellen Kraftfahrzeug 17. Die Personen 8, 9, 10, 11 können also, zumindest in einem bestimmten Erfassungsbereich, innerhalb welchem die Erfassungseinrichtung 6 die Positionierung und Ausrichtung der Virtual-Reality-Brillen 1, 2, 3, 4 zuverlässig erfassen kann, frei bewegen, infolge dessen ihre jeweilige virtuelle Perspektive auf die mittels der Virtual-Reality-Brillen 1, 2, 3, 4 angezeigte virtuelle Umgebung 12 und somit auch auf das angezeigte Kraftfahrzeug 17 entsprechend angepasst wird.

Das Virtual-Reality-System 10 kann zudem in einem weiteren Modus betrieben werden, in welchem die Personen 9, 10, 11 mittels der von ihnen aufgesetzten Virtual-Reality-Brillen 2, 3, 4 aus der gleichen virtuellen Perspektive auf die virtuelle Umgebung 12 und somit auch auf das virtuelle Kraftfahrzeug 17 blicken, wie es die Person 8 durch ihre aufgesetzte Virtual-Reality-Brille 1 tut.

In dem Fall steuert die Steuereinrichtung 6 die Virtual-Reality-Brillen 2, 3, 4 derart an, dass mittels diesen die virtuelle Umgebung 12 aus derselben virtuellen Perspektive angezeigt wird, wie sie mittels der Virtual-Reality-Brille 1 angezeigt wird. Die Personen 9, 10, 11 blicken also gemäß dem schematischen Beispiel in Fig. 3 nicht mehr von rechts auf das virtuelle Kraftfahrzeug 17 entsprechender Positionierung der Avatare14, 15, 16, sondern genau wie die Person 8 entsprechend der Positionierung des Avatars 13 von links auf das virtuelle Kraftfahrzeug 17. Dadurch ist es möglich, dass die jeweiligen Personen 8, 9, 10, 11 sich in die jeweilige Betrachtungsperspektive der anderen Personen 8, 9, 10, 11 hineinversetzen lassen können.

Allerdings besteht dabei das Risiko, dass denjenigen Personen 8, 9, 10, 11, welche die virtuelle Umgebung 12 aus einer fremden Perspektive angezeigt bekommen, unter Umständen schlecht wird. Das Risiko ist umso größer, je größer die Diskrepanz zwischen jeweiligen Kopfbewegungen der verschiedenen Personen 8, 9, 10, 11 ist.

In Fig. 4 ist ein Anzeigebereich 18 für eine der Virtual-Reality-Brillen 1, 2, 3, 4 schematisch dargestellt. Dabei ist es gemäß einem nicht beanspruchten Beispiel möglich, dass der gesamte zur Verfügung stehende Anzeigebereich 18 vollständig zum Anzeigen der virtuellen Umgebung 12 aus der fremden virtuellen Perspektive genutzt wird. Sollte der Anzeigebereich 18 beispielsweise zur von der Person 9 aufgesetzten Virtual-Reality-Brille 2 gehören, so kann es sein, dass der gesamte Anzeigebereich 18 dafür genutzt wird, die virtuelle Umgebung 12 aus derselben Perspektive wie mittels der Virtual-Reality-Brille 1 anzuzeigen, welche die Person 8 aufgesetzt hat. Dabei werden jeweilige Kopfbewegungen der Personen 8 und 9 erfasst, wobei die mittels der Virtual-Reality-Brille 2 aus derselben virtuellen Perspektive wie bei der Person 8 angezeigte virtuelle Umgebung 12 ausgeblendet wird, sobald sich die erfassten Kopfbewegungen der beiden Personen 8, 9 stärker als ein vorgegebenes Maß unterscheiden. Beispielsweise kann ein bestimmter Bewegungsradius vorgegeben werden, zudem ist es auch möglich, dass bestimmte Beschleunigungswerte hinsichtlich der translatorischen und/oder rotatorischen Kopfbewegungen vorgegeben werden. Im Prinzip können beliebige Schwellenwerte hinsichtlich der Diskrepanz der Kopfbewegungen der jeweiligen Personen 8, 9, 10, 11 vorgegeben werden, wobei bei Überschreitung dieser Schwellenwerte das virtuelle Hineinversetzen in die Beobachtungsperspektive der jeweils anderen Personen 8, 9, 10, 11 unterbrochen oder zumindest verändert wird.

Gemäß einem nicht beanspruchten Beispiel ist es möglich, dass die Person 9 mittels ihrer Virtual-Reality-Brille 2 die virtuelle Umgebung 12 aus ihrer eigenen passenden Perspektive angezeigt bekommt, sobald die Kopfbewegung der Personen 8, 9 sich zu stark unterscheiden sollten. In dem Fall ist es beispielsweise möglich, dass der gesamte Anzeigebereich 18 zur Anzeige der virtuellen Umgebung 12 aus derjenigen virtuellen Perspektive verwendet wird, welche der erfassten Kopfposition und Kopfausrichtung der Person 9 entspricht. Die zuvor aus der fremden Perspektive angezeigte virtuelle Umgebung 12 kann dann beispielsweise von außen nach innen ausgeblendet und entsprechend die virtuelle Umgebung 12 aus der zur Kopfausrichtung und Kopfposition der Person 9 passenden virtuellen Perspektive angezeigt werden.

Erfingungsgemäß wird der gesamte Anzeigebereich 18 in die beiden hier schematisch gekennzeichneten Anzeigebereiche 18, 19 aufgeteilt. Dabei kann es vorgesehen sein, dass beispielsweise in dem zentralen Anzeigebereich 19 die zweite Person 9 durchgängig die virtuelle Umgebung 12 aus der gleichen virtuellen Perspektive wie die Person 8 angezeigt bekommt, wobei in dem peripheren Anzeigebereich 20 die virtuelle Umgebung 12 entsprechend der tatsächlichen Kopfausrichtung und Kopfpositionierung der zweiten Person 9 angezeigt wird. Gemäß einem nicht beanspruchten Beispiel kann dabei das Flächenverhältnis der beiden Anzeigebereiche 19, 20 permanent konstant gehalten werden.

Erfindungsgemäß wird der Anzeigebereich 19 umso größer gewählt, je weniger sich die Kopfbewegungen von beispielsweise der Person 9 und 8 unterscheiden. Halten beispielsweise die Personen 8, 9 ihren Kopf vollständig still, so wird der Anzeigebereich 19 besonders groß gewählt, so dass die Person 9 in einem besonders großflächigen Bereich ihrer aufgesetzten Virtual-Reality-Brille 2 die virtuelle Umgebung 12 genauso sieht, wie die Person 8. Sollte es hingegen eine große Diskrepanz zwischen den Kopfbewegungen der beiden Personen 8, 9 geben, so wird der Anzeigebereich 19 relativ stark verkleinert und der periphere Anzeigeberiech 20 vergrößert, so dass die Person 9 durch ihre aufgesetzte Virtual-Reality-Brille 2 die virtuelle Umgebung 12 entsprechend ihrer eigenen Kopfausrichtung und Kopfpositionierung besonders großflächig wahrnehmen kann, wohingegen die Perspektive aus der Sicht der Person 8 besonders klein dargestellt wird.

Mittels des erläuterten Virtual-Reality-Systems 7 und der entsprechend beschriebenen Vorgehensweise zum Betreiben des Virtual-Reality-Systems 7 kann also zum einen auf besonders einfache Weise ermöglicht werden, dass eine Vielzahl von Personen 8, 9, 10, 11 eine virtuelle Umgebung 12 aus ein und derselben virtuellen Perspektive betrachten können, wobei zum anderen gleichzeitig sichergestellt werden kann, dass bei zu großen Diskrepanzen hinsichtlich ihrer jeweiligen Kopfausrichtungen und Kopfbewegungen den Personen 8, 9, 10, 11 nicht übel wird.

## Patentansprüche

1. Verfahren zum Betreiben eines Virtual-Reality-Systems (7), bei welchem eine virtuelle Umgebung (12) aus einer ersten virtuellen Perspektive mittels einer von einer ersten Person (8) aufgesetzten ersten Virtual-Reality-Brille (1) angezeigt wird, wobei die erste virtuelle Perspektive in Abhängigkeit von einer erfassten Kopfposition und/oder Kopfausrichtung der ersten Person (8) vorgegeben wird, wobei
- mittels einer weiteren von einer weiteren Person (9, 10, 11) aufgesetzten Virtual-Reality-Brille (2, 3, 4) dieselbe virtuelle Umgebung (12) ebenfalls aus der ersten virtuellen Perspektive angezeigt wird, und
- ein insgesamt zur Verfügung stehender Anzeigebereich (18) der weiteren Virtual-Reality-Brille (2, 3, 4) in einen ersten Anzeigebereich (19) und in einen zweiten Anzeigebereich (20) aufgeteilt wird, wobei im ersten Anzeigebereich (19) die virtuelle Umgebung (12) aus der ersten virtuellen Perspektive und im zweiten Anzeigebereich (20) die virtuelle Umgebung (12) aus einer weiteren virtuellen Perspektive angezeigt wird, welche in Abhängigkeit von einer erfassten Kopfposition und/oder Kopfausrichtung der weiteren Person (9, 10, 11) vorgegeben wird,
**dadurch gekennzeichnet, dass**
die weitere Virtual-Reality-Brille (2, 3, 4) derart angesteuert wird, dass der zweite Anzeigebereich (20) umso größer und entsprechend der erste Anzeigebereich (19) umso kleiner gewählt wird, je stärker sich jeweils erfasste Kopfbewegungen der ersten Person (8) und der weiteren Person (9, 10, 11) unterscheiden.

2. Verfahren nach Anspruch 1,
**dadurch gekennzeichnet, dass**
die weitere Virtual-Reality-Brille (2, 3, 4) derart angesteuert wird, dass der zweite Anzeigebereich (20) den ersten Anzeigebereich (19) umgibt.

3. Virtual-Reality-System (7), umfassend
- eine erste Virtual-Reality-Brille (1) zum Anzeigen einer virtuellen Umgebung (12);
- eine Erfassungseinrichtung (6) zum Erfassen einer Kopfposition und/oder Kopfausrichtung einer ersten Person (8), welche die erste Virtual-Reality-Brille (1) trägt;
- eine Steuereinrichtung (5), welche dazu eingerichtet ist, eine erste virtuelle Perspektive in Abhängigkeit von der erfassten Kopfposition und/oder Kopfausrichtung der ersten Person (8) vorzugeben und die erste Virtual-Reality-Brille (1) zum Anzeigen der virtuellen Umgebung (12) aus der ersten virtuellen Perspektive anzusteuern;
wobei die Steuereinrichtung (5) dazu eingerichtet ist,
- eine weitere von einer weiteren Person (9, 10, 11) aufgesetzte Virtual-Reality-Brille (2, 3, 4) zum Anzeigen der virtuelle Umgebung (12) aus der ersten virtuellen Perspektive anzusteuern,
- einen insgesamt zur Verfügung stehenden Anzeigebereich (18) der weiteren Virtual-Reality-Brille (2, 3, 4) in einen ersten Anzeigebereich (19) und in einen zweiten Anzeigebereich (20) aufzuteilen und
- im ersten Anzeigebereich (19) die virtuelle Umgebung (12) aus der ersten virtuellen Perspektive und im zweiten Anzeigebereich (20) die virtuelle Umgebung (12) aus einer weiteren virtuellen Perspektive anzuzeigen, welche in Abhängigkeit von einer erfassten Kopfposition und/oder Kopfausrichtung der weiteren Person (9, 10, 11) vorgegeben wird,
**dadurch gekennzeichnet, dass**
die Steuereinrichtung (5) dazu eingerichtet ist, die weitere Virtual-Reality-Brille (2, 3, 4) derart anzusteuern, dass der zweite Anzeigebereich (20) umso größer und entsprechend der erste Anzeigebereich (19) umso kleiner gewählt ist, je stärker sich jeweils erfasste Kopfbewegungen der ersten Person (8) und der weiteren Person (9, 10, 11) unterscheiden.

## Claims

1. Method for operating a virtual reality system (7) in which a virtual environment (12) is displayed from a first virtual perspective by means of a first pair of virtual reality glasses (1) worn by a first person (8), wherein the first virtual perspective is predefined according to a detected head position and/or head orientation of the first person (8), wherein
- the same virtual environment (12) is displayed likewise from the first virtual perspective by means of one further pair of virtual reality glasses (2, 3, 4) worn by a further person (9, 10, 11), and
- a total available display area (18) of the further pair of virtual reality glasses (2, 3, 4) is divided into a first display area (19) and into a second display area (20), wherein, in the first display area (19), the virtual environment (12) is displayed from the first virtual perspective and, in the second display area (20), the virtual environment (12) is displayed from a further virtual perspective which is predefined according to a detected head position and/or head orientation of the further person (9, 10, 11),
**characterised in that**
the further pair of virtual reality glasses (2, 3, 4) is controlled so that the second display area (20) is selected to be larger, and the first display area (19) is correspondingly selected to be smaller, as the difference between detected head movements of the first person (8) and the further person (9, 10, 11) respectively increases.

2. Method according to claim 1,
**characterised in that**
the further pair of virtual reality glasses (2, 3, 4) is controlled so that the second display area (20) surrounds the first display area (19).

3. Virtual reality system (7), comprising
- a first pair of virtual reality glasses (1) for displaying a virtual environment (12);
- a detection apparatus (6) for detecting a head position and/or head orientation of a first person (8) wearing the first pair of virtual reality glasses (1); and
- a control apparatus (5) configured to predefine a first virtual perspective according to the detected head position and/or head orientation of the first person (8) and to control the first pair of virtual reality glasses (1) to display the virtual environment (12) from the first virtual perspective,
wherein the control apparatus (5) is configured to
- control a further pair of virtual reality glasses (2, 3, 4) worn by a further person (9, 10, 11) to display the virtual environment (12) from the first virtual perspective,
- divide a total available display area (18) of the further pair of virtual reality glasses (2, 3, 4) into a first display area (19) and a second display area (20), and
- in the first display area (19), to display the virtual environment (12) from the first virtual perspective and, in the second display area (20), to display the virtual environment (12) from a further virtual perspective which is predefined according to a detected head position and/or head orientation of the further person (9, 10, 11),
**characterised in that**
the control apparatus (5) is configured to control the further pair of virtual reality glasses (2, 3, 4) so that the second display area (20) is selected to be larger, and the first display area (19) is correspondingly selected to be smaller, as the difference between detected head movements of the first person (8) and the further person (9, 10, 11) respectively increases.

## Revendications

1. Procédé de fonctionnement d'un système de réalité virtuelle (7), dans lequel un environnement virtuel (12) est affiché à partir d'une première perspective virtuelle au moyen de premières lunettes de réalité virtuelle (1) portées par une première personne (8), dans lequel la première perspective virtuelle est déterminée en fonction d'une position de tête et/ou d'une orientation de tête acquises de la première personne (8), dans lequel
- au moyen d'autres lunettes de réalité virtuelle (2, 3, 4) portées par une autre personne (9, 10, 11) le même environnement virtuel (12) est également affiché à partir de la première perspective virtuelle, et
- une zone d'affichage (18) dans l'ensemble disponible des autres lunettes de réalité virtuelle (2, 3, 4) est partagée en une première zone d'affichage (19) et en une seconde zone d'affichage (20), dans lequel dans la première zone d'affichage (19) l'environnement virtuel (12) est affiché à partir de la première perspective virtuelle et dans la seconde zone d'affichage (20) l'environnement virtuel (12) est affiché à partir d'une autre perspective virtuelle, qui est déterminée en fonction d'une position de tête et/ou d'une orientation de tête acquises de l'autre personne (9, 10, 11),
**caractérisé en ce que**
les autres lunettes de réalité virtuelle (2, 3, 4) sont commandées de telle sorte que, plus la seconde zone d'affichage (20) est choisie grande et en conséquence plus la première zone d'affichage (19) est choisie petite, plus les mouvements de tête de la première personne (8) et de l'autre personne (9, 10, 11) respectivement acquis se différencient fortement.

2. Procédé selon la revendication 1,
**caractérisé en ce que**
les autres lunettes de réalité virtuelle (2, 3, 4) sont commandées de telle sorte que la seconde zone d'affichage (20) entoure la première zone d'affichage (19).

3. Système de réalité virtuelle (7), comprenant
- des premières lunettes de réalité virtuelle (1) pour afficher un environnement virtuel (12) ;
- un dispositif d'acquisition (6) pour acquérir une position de tête et/ou une orientation de tête d'une première personne (8) qui porte les premières lunettes de réalité virtuelle (1) ;
- un dispositif de commande (5) qui est conçu pour déterminer une première perspective virtuelle en fonction de la position de tête et/ou de l'orientation de tête acquises de la première personne (8) et pour commander les première lunettes de réalité virtuelle (1) pour afficher l'environnement virtuel (12) à partir de la première perspective virtuelle ;
dans lequel le dispositif de commande (5) est conçu pour
- commander d'autres lunettes de réalité virtuelle (2, 3, 4) portées par une autre personne (9, 10, 11) pour afficher l'environnement virtuel (12) à partir de la première perspective virtuelle,
- partager une zone d'affichage (18) dans l'ensemble disponible des autres lunettes de réalité virtuelle (2, 3, 4) en une première zone d'affichage (19) et en une seconde zone d'affichage (20) et
- afficher, dans la première zone d'affichage (19), l'environnement virtuel (12) à partir de la première perspective virtuelle et, dans la seconde zone d'affichage (20), l'environnement virtuel (12) à partir d'une autre perspective virtuelle qui est déterminée en fonction d'une position de tête et/ou d'une orientation de tête acquises de l'autre personne (9, 10, 11),
**caractérisé en ce que**
le dispositif de commande (5) est conçu pour commander les lunettes de réalité virtuelle (2, 3, 4) de telle sorte que, plus la seconde zone d'affichage (20) est choisie grande et en conséquence plus la première zone d'affichage (19) est choisie petite, plus les mouvements de tête de la première personne (8) et de l'autre personne (9, 10, 11) respectivement acquis se différencient fortement.
